# EUROPEAN PATENT SPECIFICATION

(11) **EP 3 279 466 B1**
(45) Date of publication and mention of the grant of the patent: **08.06.2022**
(21) Application number: 15887349.7
(22) Date of filing: 31.03.2015
(51) Int. Cl.: F03D 1/06

(54) **NEW HUB OF A WIND TURBINE**
NEUE NABE FÜR EINE WINDTURBINE
NOUVEAU MOYEU D'UN AÉROGÉNÉRATEUR

(43) Date of publication of application: 07.02.2018
(73) Proprietor: Nabrawind SL, 31002 Pamplona (ES)
(72) Inventor: SANZ PASCUAL, Eneko, 31002 Pamplona (Navarra) (ES); SAVII COSTA, Hely Ricardo, 31133 Uterga (Navarra) (ES); ALTI BARBÓN, Ignacio, 48008 Bilbao (Vizcaya) (ES)
(74) Representative: Igartua, Ismael
(86) International application number: PCT/ES2015/000046
(87) International publication number: WO 2016/156623

(56) References cited:
- CN-A- 103 089 553
- CN-A- 103 089 553
- CN-A- 103 174 583
- JP-A- 2005 282 451
- US-A1- 2012 023 861
- US-A1- 2014 140 851
- US-A1- 2014 140 851

## Description

### FIELD OF THE INVENTION

The present invention is encompassed within the field of wind turbines and, in particular, entails a hub developed in lattice, coupled with its corresponding bearing to the rotational shaft and whose connection with the blades is made through the hub per se via a metal section that connects with the blade, minimally affecting the aerodynamic performance of the unit, thus enabling a drastic reduction in cost and, therefore, a substantial improvement in the cost of energy.

### BACKGROUND OF THE INVENTION

The rotor constitutes the part of the wind turbine that rotates outside the nacelle, i.e., the blades, hub and pitch mechanism. The rotor can make up 20% of the overall cost of a wind turbine, but with the modular bar structure object of the invention, the hub is simplified considerably, which reduces costs and simplifies shipping.

Currently, the hub is a major bulk object made of casting with the subsequent cost of manufacturing, shipping and assembly. It is a part subject to elevated efforts since it supports the blades, which, once embedded in the hub, act as overhanging beams and transmit the torque that enables the production of energy and the flexion loads arising from the action of the wind and its own weight. With a view to optimizing the cost of this element, a new hub designed in lattice that has transition parts radially toward the blade that are also made in lattice. This all consists in what can be defined as a large hub.

The following hubs are prominent in the state of the art: Patent US2008153892 presents a hub mounted on a rotating shaft. The hub is composed by a tensing flywheel with two large interconnected rings (one external and the other internal) with a plurality of radii that extend to the rotation shaft. The blades are mounted on the hub with one part between the rings that form the tensing flywheel and another part externally. The main differences are that the new invention has a completely different design and contains no flywheel, and the blades form part of the tensing design, while they do not overlap in the new invention. Patent WO 2010/040829 is a direct drive wind turbine whose assembly of hub and blades houses a permanent magnet generator, all resting on the rotating shaft of the wind turbine. The hub is formed by a structure that supports each blade. This assembly structure (8) has a gap sufficiently large enough so that the stator and rotor can be coupled to the structure itself. Patent WO 2013/045474 focuses more on the hub support and surface that is prepared for the joint with the blades. Inside, this hub contains the corresponding bearings to couple with the main shaft. These last two PCT applications are from the same applicant and mainly differ in that their design integrates the hub, blades and the generator itself in a single large rotor, while the new invention clearly differentiates them. And lastly, patent EP 1303689 presents a hub formed by the connection of various parts that in turn couple with the blade root. This hub is formed by a hub core and number of independent parts equal to the number of blades. The independent parts or extenders have an oval flange (hub side) on one side and a circular flange (blade side) on the other. This configuration simplifies the hub core, which in any case is a cast part. The main differences with the new invention are that the hub with its radial transition parts are made in a lattice and that the dimensions of the radial transmission parts are several times greater than the very core of the hub. Moreover, the connections are made via through bolts that couple the metal lattice parts constituting a single hub.

CN103089553 A discloses a wind turbine with a hub and three blades, each blade comprising a blade truss and a pitch blade. The joint between said truss and said pitch being made on its vertices via a connecting drive device.

US2014140851 A1 discloses a wind turbine with a hub and blades, the hub being formed by a lattice construction, and radial blade root extender units which are also made up of trapezoidal lattice constructions, so that a light weight efficient rotor is achieved.

### DISCLOSURE OF THE INVENTION

The new rotor object of the invention arises from the need to modify the root area of modern rotors. With the normal configuration, the weight and cost of the blades in the root area is substantially elevated, though its productive contribution is very low. Therefore, the first step of the invention is to eliminate the blade root area or rather replace it with a supporting structure solely for the purpose of making the connection at an extremely low cost.

To do so, instead of having the blades commencing near the center of rotor, where their contribution is relatively minimal, their attachment to the hub is made at a considerable distance. In other words, the proposal is to considerably increase the hub diameter so that blades of a shorter length and consequently lesser costs produce the same energy. The solution to this approach is a hub having a large diameter and lattice structure, highly efficient in terms of mass and cost so that the balance between the increased hub size and the reduction in the blades is ultimately highly beneficial.

The most commonly used hub is the rigid hub where the blades are bolted to the hub, which is in turn fastened rigidly to the rotation system through the corresponding bearings. On the basis of this basic design, a large lattice hub is developed, including a central part with various radial transition parts to replace the cast hubs currently in use. The most practical design options are in triangle or hexagonal shapes for three-blade wind turbines. Another square or rectangular-shaped hub design is contemplated for two-blade wind turbines. Thus, in a first embodiment of the invention, the core of the hub is a part with an equilateral triangle on the front face, three rectangular sides that form the three-dimensional body and another equilateral triangle on the back face. In other words, a prism with a triangular base. Each rectangular side or node of this prism is connected with its corresponding transition part toward the blade and the hub contains a non-rotating cylindrical part that is anchored with the frame to render flexion load transmission independent with rotational loads. The main rotational shaft is also inside the hub, attached to it through a flange anchored at the outermost base of the triangular prism. Lastly, the joint between the non-rotating part connected to the frame and the hub core is made through two circular bear that coordinate the moving parts corresponding to the rotor, separating them from the fixed parts connected to the frame.

The ends of the large hub or radial transition parts are established between the three sides of the hub core (triangular-based prism) and blade root. This radial transition part is a truncated pyramid lattice formed by various connected parts, that at one end are anchored with bolts to one of the hub sides, and on the other end to the blade root with its corresponding pitch system.

To create the sides or nodes of the hub core, a crossbeam is extended from the vertex of each side or triangle base in the front and rear. These crossbeams are braced transversely with the corresponding diagonal braces. The radial transition parts are connected to the hub core nodes via the vertices of the triangular bases or a lug attached as a prolongation of the vertices. At least one shear pin runs through every anchor point or lug to fasten the side walls to the hub transition part.

The central hub internally houses a main shaft which turns together with the rest of the hub. Said main shaft is connected to a circular flange situated outside the triangular base. The rotation of the main shaft is achieved by two sets of circular bearings established on the fixed part being formed by a hollow cylinder rigidly connected to a frame.

There is a pitch system together with the connection to the blade beam at the end of the radial transition part. The connection between this lattice structure and blade bearing is also novel, providing the necessary rigidness to this transition efficiently in terms of mass and cost.

The inclusion of this large hub reduces the cost of the complete rotor by 20% without altering its aerodynamic efficiency, as demonstrated when comparing the mass and cost for a single AEP (Annual Energy Production).

The main advantage is that the large hub with the radial transition parts are built in lattice with no aerodynamic contribution, which permits the incorporation of the aerodynamic component, the corresponding blade, further away from the rotor shaft, thus increasing its relative productive efficiency due to an increase in distance compared to the rotor shaft.

### BRIEF DESCRIPTION OF THE DRAWINGS

Below is a very brief description of a series of drawings useful for better understanding the invention. These drawings serve as a mere example and are expressly related yet not restricted to the different embodiments thereof.
Figure 1 is a general view of a state-of-the-art rotor and the rotor of the new invention with their corresponding sweeping areas.
Figure 2 is a chart that compares mass and unitary AEP along the length of the blade.
Figure 3 is a detail of the large hub, depicting the central core and the transition parts, and a profile view, in this case with only one of the three transition sections between core and blade.
Figure 4 is a perspective view of the previous figure with only one of the three transition sections between core and blade.
Figure 5 represents a front view of the hub and its Section AA, depicting fixed and rotational parts.
Figure 6 depicts the base of the prism that the hub forms and the shear connection in a single node of the transition elements.
Figure 7 depicts a second embodiment with two shear pints per vertex, one per each transition section toward the blade.
Figure 8 depicts a top view of the triangular prism formed by the hub core, where the rectangular sides contain the diagonal braces.
Figure 9 depicts the modularity of the triangle-shaped bases of the hub core prism.
Figure 10 depicts the connection of the transition part and the blade in one embodiment where the transition section elements are connected on the inside.
Figure 11 depicts the alternative embodiment, where the transition section elements are connected outside the blade bearing via a square auxiliary plate.
Figures 12 and 13 depicts two cross-sections of the preferential embodiment whether the transition between the transition section and the blade bearing is made via a highly rigid part.
Figure 14 depicts two embodiments with a hexagonal hub for three blades and a square hub for two blades.

### DETAILED DISCLOSURE OF THE INVENTION

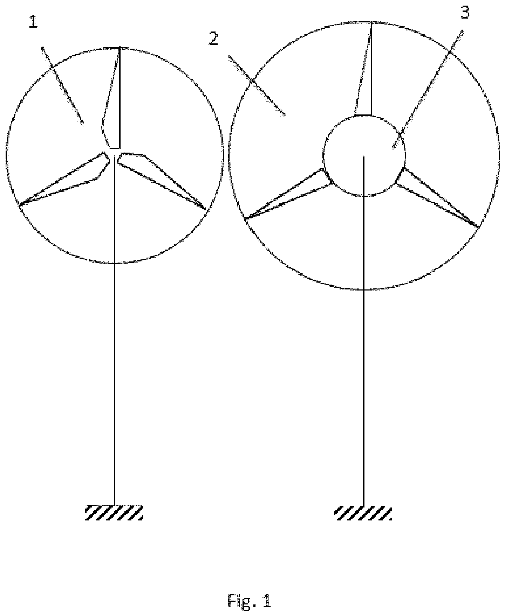

As depicted in figure 1, the new rotor object of the invention manages to modify the root area of modern rotors. The figure on the left contemplates the sweeping area (1) achieved with a conventional rotor and the figure on the right contemplates the sweeping area (2) of the rotor of the invention after eliminating the blade root area (3) or after replacing it with a large lattice hub. This new hub enables, together with the lattice part replacing the blade portion, production of the same energy with a smaller blade, since the sweeping area (2) is equal to or greater than the sweeping area (1) despite the reduced aerodynamic blade length.

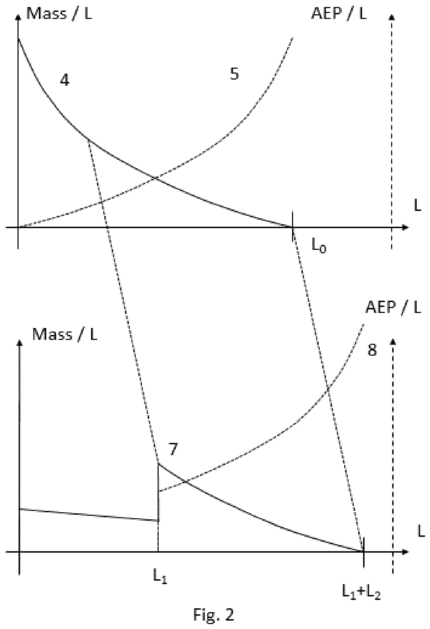

Upon examination in figure 2 of the mass and unit cost of each cross-section of a blade having a length of L₀, there is a descending curve (4) describing how the mass and cost decreases based on the length, and another ascending curve (5), which depicts the unitary AEP (Annual Energy Production) for each cross-section also based on length. If part of the blade is replaced with the lattice hub, the rotor radius will become L₁ + L₂ while the length of the blade decreases to L₂, with a drastic reduction in mass and cost in the first part of the curve (6) L₁ corresponding to the replaced blade root, and with a descending curve (7) corresponding to blade length L₂. The ascending line (8) related to AEP, however, disappears between L=0 and L= L₁ for the lack of aerodynamic contribution of the lattice, which is nevertheless offset in the total AEP by the greater height of the unitary curve in the blade section L₂ because of its greater distance from the center of the rotor.

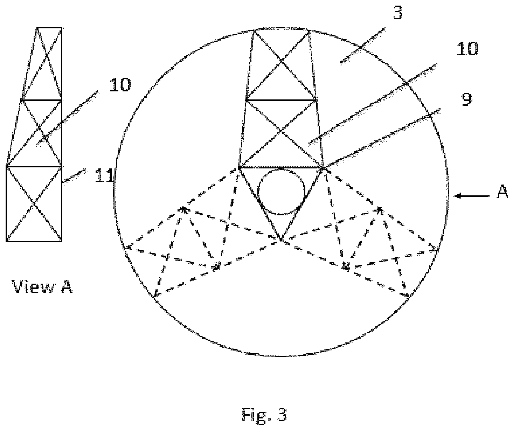

Figure 3 depicts the hub, object of the invention, which is included inside the sweeping area (3) corresponding to the replaced blade root. The hub's central body or core (9) is formed by a three-dimensional prism that in the current practical embodiment has a front in the shape of an equilateral triangle, since it applies to a three-blade rotor. The part corresponding to the transition lattice (10) extends radially from each side of the cited three-dimensional prism toward the blade. The profile view in figure 3 depicts one of the three sides of the three-dimensional prism that forms the hub's central core (9) with a rectangular metal frame (11) braced with two additional metal beams. The radial part of the hub corresponding to the transition (10) extends as a truncated pyramidal lattice with an approximate dimension greater than double the length corresponding to the central body (9) and it is formed by at least two metal structures joined together.

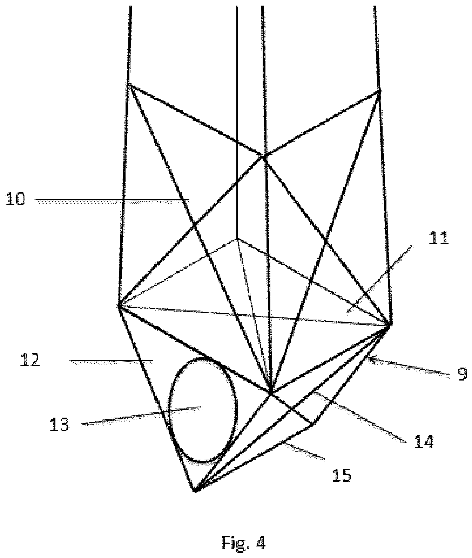

Figure 4 depicts the large hub in perspective, with the hub's central area (9) including a circular flange (13) superimposed on the front triangle (12) and two diagonal braces (14) crossing each of the three rectangular frames (11) formed by the two crossbeams (15) between the front triangle (12) and rear triangle (12'). The circular flange (13) is related and turns with the wind turbine's rotational shaft (16), and is likewise against the radial part of the hub corresponding to the transition (10) toward the blade.

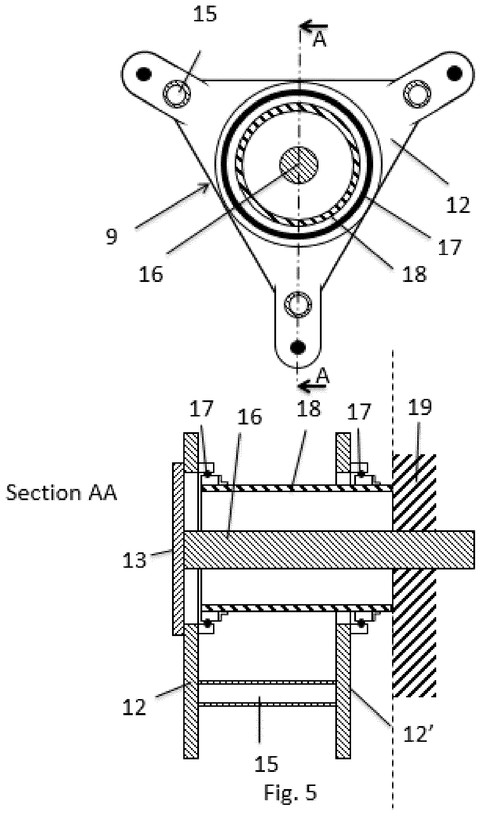

The thin stripes in figure 5 represent the parts of the central hub that turn with the rotational shaft (16): the circular flange (13), front triangle (12) and rear triangle (12'). Both areas are connected, and the circular flange (13) is superimposed on the front triangle part (12). The assembly rotates through its corresponding bearings (17) around the fixed part of the hub (18). This fixed part of the hub (18) is a cylinder embedded on the wind turbine bedplate (19) and connects to the bearing (17) via brackets or similar systems. Between the front triangle (12) and rear triangle (12'), there are crossbeams (15) that form the triangular prism of the hub's core or central body (9).

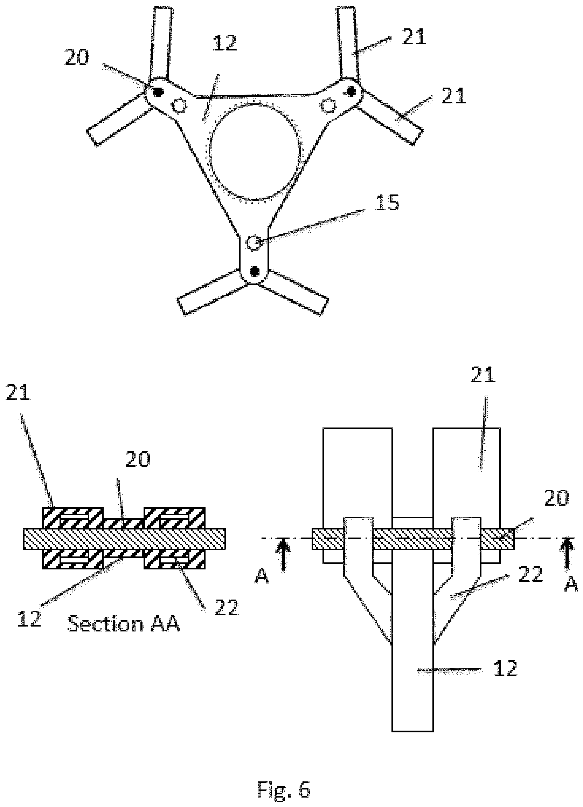

Figure 6 represents one embodiment where the joint of two beams (21) of the radial parts (10) of two blades (25) connect to the hub core in a single node through a single shear pin (20). Two lateral reinforcements (22) also exit from the triangle lugs (12), which also connect in shear to the beams (21) via the same pin (20).

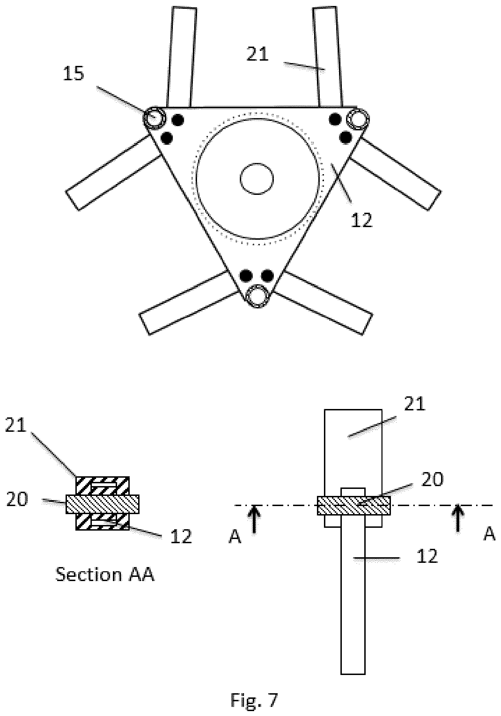

Figure 7 depicts another practical embodiment where the hub core is connected on the triangle vertices (12) under the crossbeam (15) via two shear pins (20), using a pin (20) for each beam (21) of the transition section (10) of each blade (25). In this case, the reinforcements (22) in the previous figure are unnecessary.

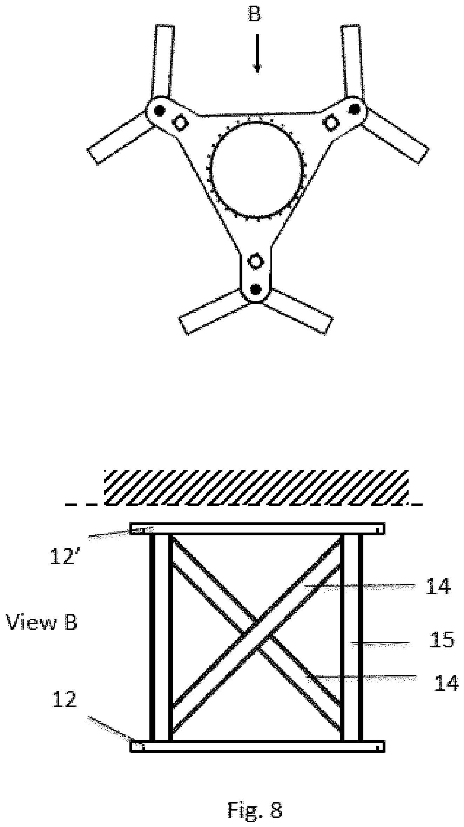

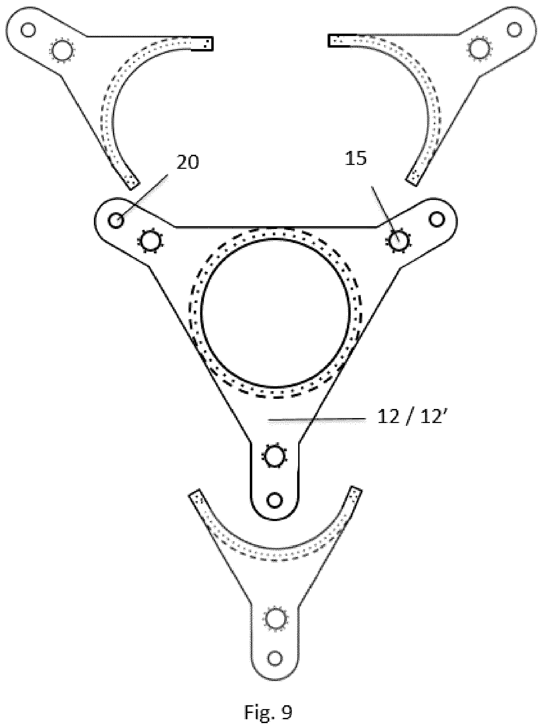

In figure 8, the top view of the triangle prism formed by the hub core depicts, in the bottom figure, the crossbeams (15) that extend from the front triangular part (12) and rear triangular part (12'), and, in turn, the diagonal braces (14) that transversely brace the structure. Figure 9 depicts the modularity of the triangular bases (12 and 12') of the prism that constitute the hub core (9) with a view to simplifying manufacturability and transport. The different parts are subsequently coupled via fastening elements or similar.

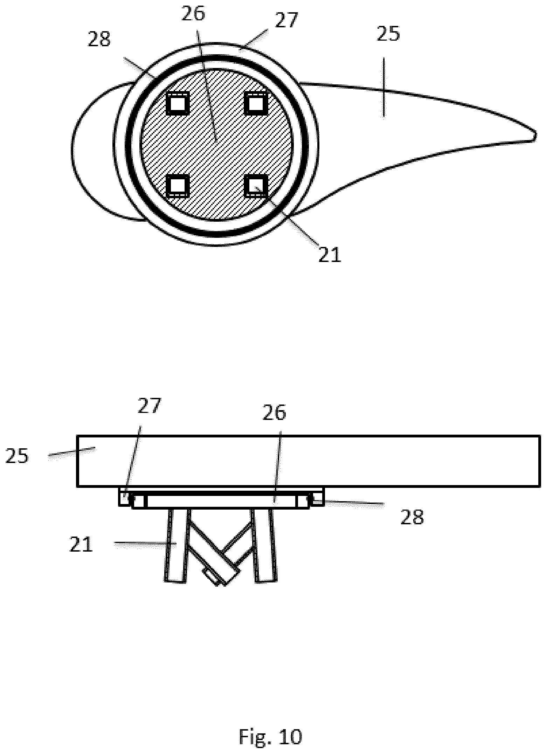

Figure 10 depicts how one of the hub's radial parts (10) connects to one of the blades (25) in the part corresponding to its beam. The transition between both parts is made internally, with a first circular part (26) coupled to the beams (21) of the transition section, which is linked to a second circular part (27) connected to the blade (25). Between both circular parts (26 and 27), there are bearings (28) in a circular shape to render the blade's pitch movement.

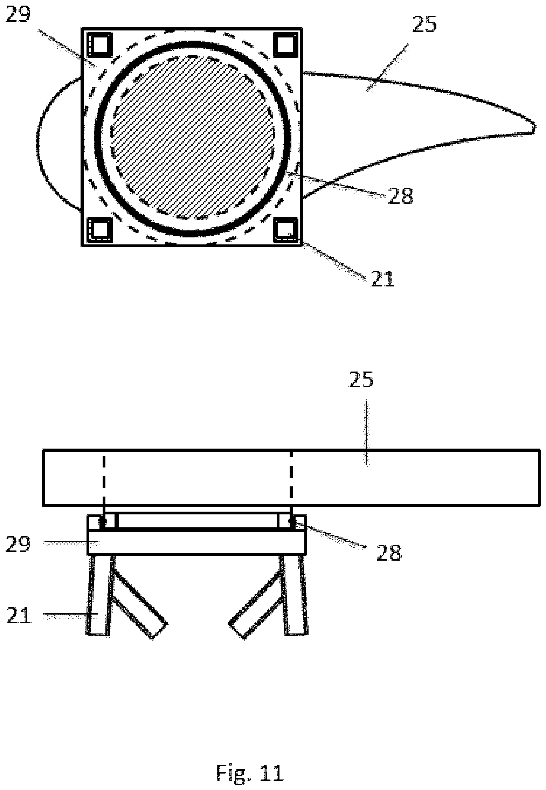

Figure 11 depicts another alternative embodiment, where the beams (21) of the transition section (10) are connected outside to bearing (28) of the blade (25) via a square auxiliary plate (29). The beams (21) run to the inner corners of the auxiliary plate (29).

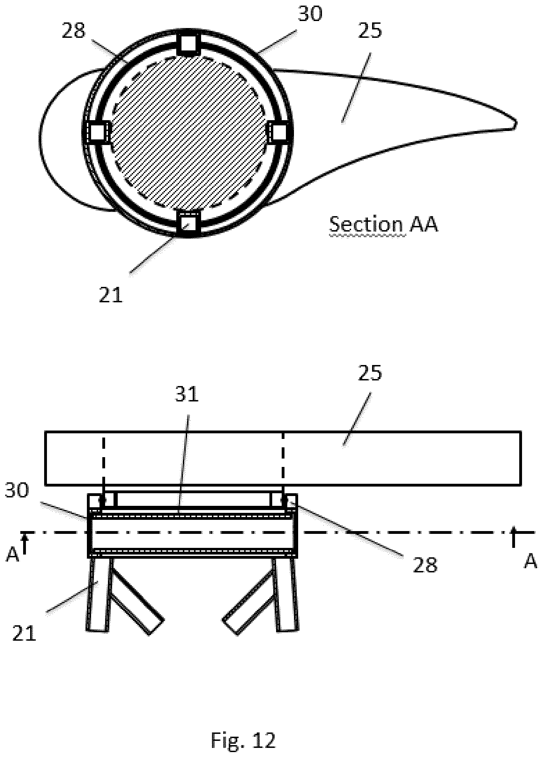

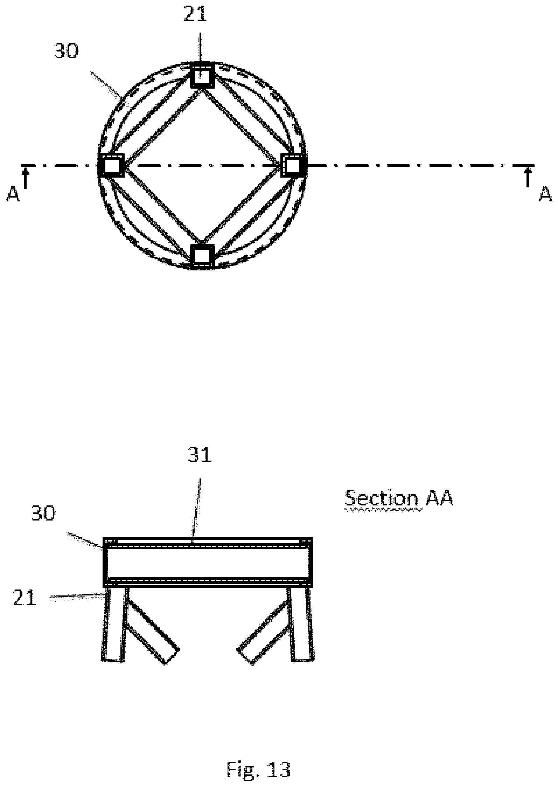

Figures 12 and 13 depict two cross-sections of the preferential embodiment of the new invention. Figure 12 depicts the auxiliary part, object of the invention, a part that needs rigidness to flexion and thus is constituted by a continuous circular ring (30) closed by two flat plates (31) and positioned between the bearings (28) and four beams (21). Section AA depicts that the beams (21) are assembled on the part (30 and 31) at the same height with the bearings (28), minimizing the eccentricity in the transmission of loads as per the embodiments in figures 10 and 11. Figure 13 depicts the joint between beams (21) and diagonal braces with the part formed by the circular ring (30) and the two plates (31), thus situated between the elements of the transition section of the blade and the bearing through a highly rigid part.

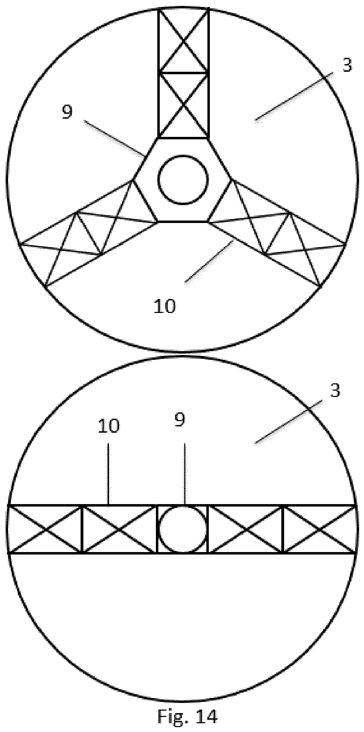

As shown in figure 14, there are two further embodiments with a hexagonal hub core (9) for three blades, and with a square hub core (9) for two blades. The prism changes its triangular base to a hexagonal base or square base.

## Claims

1. Wind turbine hub for a rotor with at least one rotor blade, where the blades (25) and pitch systems are bolted to the hub and the rotary part of this hub moves with the rotational shaft (16) via the corresponding bearings (17), the wind turbine being formed by:
- a hub central core (9) composed by crossbeams (15) connected between the front part (12) and the rear part (12') of a three-dimensional prism having triangular, square or hexagonal base, with crossed braces (14) on all sides (11) of the prism, and
- at least two transition parts (10) per blade (25) that extend radially from the hub core (9) to the blade (25) and have a truncated pyramid shape which are formed by attached modules, each one constituting one of its faces with beams (21) and internally crossing transverse braces,
the hub core (9) and the radial transition parts (10) forming an assembly connected via shear through pins (20),
**characterized in that** the central core (9) internally houses a main shaft (16) which turns together with the rest of the hub, connecting to a circular flange (13) situated outside the triangular base (12), the rotation being achieved by the two sets of circular bearings (17) established on the fixed part being formed by a hollow cylinder (18) rigidly connected to a frame (19).

## Patentansprüche

1. Nabe einer Windturbine für einen Rotor mit mindestens einem Rotorblatt, wobei die Blätter (25) und Pitchsysteme mit der Nabe verschraubt sind und der drehbare Teil dieser Nabe sich mit der Drehwelle (16) über die zugehörigen Lager (17) bewegt, wobei die Windturbine durch Folgendes gebildet wird:
- einem zentralen Nabenkern (9), der aus Querträgern (15) besteht, die zwischen dem vorderen Teil (12) und dem hinteren Teil (12') eines dreidimensionalen Prismas mit dreieckiger, quadratischer oder sechseckiger Grundfläche verbunden sind, mit Querstreben (14) an allen Seiten (11) des Prismas, und
- mindestens zwei Übergangsteile (10) pro Blatt (25), die sich radial von dem Nabenkern (9) bis zum Blatt (25) erstrecken und die Form eines Pyramidenstumpfes aufweisen, die durch angefügte Module gebildet werden, wobei jedes Modul eine seiner Seiten mit Trägern (21) und sich intern kreuzenden Querstreben bildet,
wobei der Nabenkern (9) und die radialen Übergangsteile (10) eine Anordnung bilden, die durch Scherbolzen (20) verbunden ist,
**dadurch gekennzeichnet, dass** der zentrale Kern (9) innen eine Hauptwelle (16) aufnimmt, die sich zusammen mit dem Rest der Nabe dreht und mit einem kreisförmigen Flansch (13) verbunden ist, der außerhalb der dreieckigen Grundfläche (12) liegt, wobei die Drehung durch die beiden Sätze kreisförmiger Lager (17) erreicht wird, die auf dem feststehenden Teil etabliert sind, gebildet durch einen Hohlzylinder (18), der starr mit einem Rahmen (19) verbunden ist.

## Revendications

1. Moyeu d'aérogenerateur pour un rotor avec au moins une pale de rotor, où les pales (25) et les systèmes de pas sont boulonnés au moyeu et la partie rotative de ce moyeu se déplace avec l'arbre rotatif (16) par l'intermédiaire des paliers correspondants (17), l'éolienne étant formée par :
- un noyau central de moyeu (9) composé de traverses (15) reliées entre la partie avant (12) et la partie arrière (12') d'un prisme tridimensionnel à base triangulaire, carrée ou hexagonale, avec des entretoises croisées (14) sur tous les côtés (11) du prisme, et
- au moins deux parties de transition (10) par pale (25) qui s'étendent radialement du noyau de moyeu (9) à la pale (25) et ont une forme de pyramide tronquée qui sont formées par des modules attachés, chacun constituant une de ses faces avec des poutres (21) et des entretoises transversales se croisant intérieurement,
le noyau central (9) et les pièces de transition radiales (10) formant un ensemble relié par des axes de cisaillement traversants (20),
**caractérisé en ce que** le noyau central (9) loge intérieurement un arbre principal (16) qui tourne avec le reste du moyeu, en se connectant à une bride circulaire (13) située à l'extérieur de la base triangulaire (12), la rotation étant obtenue par les deux jeux de paliers circulaires (17) établis sur la partie fixe étant formée par un cylindre creux (18) relié de manière rigide à un cadre (19).
